# DEMANDE DE BREVET EUROPEEN

(11) **EP 3 598 314 A1**
(43) Date de publication de la demande: **22.01.2020**
(21) Numéro de dépôt: 19186866.0
(22) Date de dépôt: 17.07.2019
(51) Int. Cl.: G06F 13/28

(54) **ACCÈS DIRECT EN MÉMOIRE**

(30) Priorité: 19.07.2018 FR 1856705
(71) Demandeur: STMicroelectronics (Grenoble 2) SAS, 38000 Grenoble (FR)
(72) Inventeur: CLOUTE, François, 38500 COUBLEVIE (FR)
(74) Mandataire: Cabinet Beaumont

(57) **Abrégé**

La présente description concerne une mémoire contenant au moins une liste chaînée d'enregistrements, chaque enregistrement (LLI-1, LLI-2, LLI-3) contenant un premier champ (C5) déterminant le nombre de champs (C1, C2, C3, C4, C5) de l'enregistrement suivant.

## Description

### Domaine technique

La présente description concerne de façon générale le domaine des systèmes électroniques, et plus particulièrement des systèmes électroniques dans lesquels des exécutions de tâches, par exemple des transferts de données par accès direct en mémoire (DMA - "Direct Memory Access"), sont paramétrées par une liste chaînée d'enregistrements stockée dans une mémoire.

### Technique antérieure

L'accès direct en mémoire est un procédé permettant, dans un système électronique, des transferts de données entre un périphérique et une mémoire, entre deux périphériques ou entre deux mémoires sans intervention d'une unité centrale de traitement (CPU - "Central Processing Unit") si ce n'est pour lancer et conclure le transfert.

L'accès direct en mémoire est généralement mis en oeuvre par un circuit de contrôle d'accès direct en mémoire. Pour effectuer un transfert de données, le circuit lit dans une mémoire un enregistrement d'une liste chaînée d'enregistrements ("Linked List Item" - LLI) afin d'obtenir les paramètres du transfert. Ces paramètres lus sont stockés temporairement dans un ensemble de registres, ou banque de registres, du circuit. Le circuit effectue ensuite le transfert en fonction des paramètres stockés.

### Résumé de l'invention

Un mode de réalisation pallie au moins certains inconvénients des systèmes électroniques connus.

Un mode de réalisation pallie au moins certains inconvénients des systèmes électroniques dans lesquels une tâche est paramétrée par des registres programmés à partir d'une liste chainée d'enregistrements stockée en mémoire.

Un mode de réalisation pallie au moins certains inconvénients des systèmes électroniques dans lesquels la tâche paramétrée par les registres est un transfert de données par accès direct en mémoire.

Ainsi, selon un premier aspect, un mode de réalisation prévoit une mémoire contenant au moins une liste chainée d'enregistrements, chaque enregistrement contenant un premier champ déterminant le nombre de champs de l'enregistrement suivant, chaque champ d'un enregistrement étant représentatif d'un contenu à programmer dans un registre d'une banque de registres.

Selon un mode de réalisation, le premier champ d'un enregistrement détermine quel registre ou quels registres de la banque de registres sont programmés à partir du ou des champs de l'enregistrement suivant lors d'une mise à jour de la banque de registres à partir de l'enregistrement suivant.

Selon un mode de réalisation, le premier champ détermine dans quels registres doivent être programmés lesdits contenus.

Selon un mode de réalisation, le premier champ comprend des bits dont chacun identifie un registre, les valeurs desdits bits déterminant les champs de l'enregistrement à programmer.

Selon un mode de réalisation, chaque enregistrement est représentatif de paramètres d'exécution d'une tâche.

Selon un mode de réalisation, la tâche est un transfert de données par un circuit de contrôle d'accès direct en mémoire.

Selon un mode de réalisation, pour chaque enregistrement représentatif d'un transfert de données, les paramètres d'exécution du transfert comprennent une condition de début de transfert et un événement de fin de transfert.

Selon un mode de réalisation, pour chaque enregistrement, les paramètres d'exécution du transfert comprennent en outre une indication d'au moins un moment où ladite condition doit être détectée et d'au moins un moment où ledit événement doit être généré.

Selon un mode de réalisation, la mémoire contient une première et une deuxième listes chaînées d'enregistrements, la condition de début d'un enregistrement de la première liste correspondant à une détection de l'événement d'un enregistrement de la deuxième liste.

Selon un mode de réalisation, la mémoire est de type SRAM.

Selon le premier aspect, un mode de réalisation prévoit un procédé comprenant des mises à jour successives d'une banque de registres à partir d'une liste chaînée d'enregistrements contenue dans une mémoire telle que définie précédemment.

Selon un mode de réalisation, chaque enregistrement détermine une des mises à jour successives.

Selon un mode de réalisation, le procédé comprend :
- lire le registre programmé à partir du premier champ d'un enregistrement courant ;
- en déduire, pour chaque registre, si l'enregistrement suivant comprend un champ à partir duquel le registre doit être programmé lors de la prochaine programmation de la banque de registres ; et
- lors de ladite prochaine programmation de la banque de registres, programmer à partir de chaque champ de l'enregistrement suivant le registre correspondant de la banque de registres.

Selon le premier aspect, un mode de réalisation prévoit un système électronique comprenant une mémoire telle que définie précédemment, et un circuit muni d'une banque de registres, le circuit étant configuré pour mettre en oeuvre le procédé défini précédemment.

Selon un mode de réalisation, le circuit est un contrôleur d'accès direct en mémoire.

Selon un deuxième aspect, un mode de réalisation prévoit une mémoire contenant au moins une liste chaînée d'enregistrements, chaque enregistrement étant représentatif de paramètres d'un transfert de données par un circuit de contrôle d'accès direct en mémoire, les paramètres comprenant une condition de début de transfert et un événement de fin de transfert.

Selon un mode de réalisation, pour chaque enregistrement, les paramètres comprennent en outre une indication d'au moins un moment où ladite condition doit être détectée et d'au moins un moment où ledit événement doit être généré.

Selon un mode de réalisation, la mémoire contient une première et une deuxième listes chaînées d'enregistrements, la condition de début d'un enregistrement de la première liste correspondant à une détection de l'événement de fin d'un enregistrement de la deuxième liste.

Selon un mode de réalisation, chaque enregistrement contient un premier champ déterminant le nombre de champs de l'enregistrement suivant, chaque champ d'un enregistrement étant représentatif d'un contenu à programmer dans un registre d'une banque de registres.

Selon un mode de réalisation, le premier champ d'un enregistrement détermine quel registre ou quels registres de la banque de registres sont programmés à partir du ou des champs de l'enregistrement suivant lors d'une mise à jour de la banque de registres à partir de l'enregistrement suivant.

Selon un mode de réalisation, le premier champ détermine dans quels registres doivent être programmés lesdits contenus.

Selon un mode de réalisation, le premier champ comprend des bits dont chacun identifie un registre, les valeurs desdits bits déterminant les champs de l'enregistrement à programmer.

Selon un mode de réalisation, le premier enregistrement de la liste contient autant de champs qu'il y a de registres.

Selon un mode de réalisation, la mémoire est de type SRAM.

Selon le deuxième aspect, un mode de réalisation prévoit un procédé de transfert de données par accès direct en mémoire dans lequel des premiers transferts sont effectués sur un premier canal d'un circuit de contrôle d'accès direct en mémoire et des deuxièmes transferts sont effectués sur un deuxième canal du circuit, chaque premier transfert étant paramétré par un enregistrement correspondant d'une première liste d'une mémoire telle que définie précédemment.

Selon un mode de réalisation, chaque enregistrement de la première liste correspond à une mise à jour d'une première banque de registres associée au premier canal, et chaque enregistrement de la deuxième liste correspond à une mise à jour d'une deuxième banque de registres associée au deuxième canal.

Selon un mode de réalisation, un contenu courant de chaque banque de registres paramètre un transfert correspondant sur le canal auquel est associée la banque de registres.

Selon un mode de réalisation, pour chaque enregistrement, le transfert correspondant ne débute que si la condition de début de l'enregistrement est détectée.

Selon le deuxième aspect, un mode de réalisation prévoit un système électronique comprenant une mémoire telle que définie précédemment, et un circuit de contrôle d'accès direct en mémoire muni de plusieurs canaux dont chacun est associé à une banque de registres, le circuit étant configuré pour mettre en oeuvre le procédé tel que défini précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique 1 du type auquel s'appliquent, à titre d'exemple, les modes de réalisation qui vont être décrits ;
la figure 2 est un organigramme illustrant, sous forme de blocs, un mode de réalisation d'un procédé de transfert de données par accès direct en mémoire ;
la figure 3 représente, schématiquement et sous forme de blocs, un mode de réalisation d'une banque de registres d'un circuit de contrôle d'accès direct en mémoire ;
la figure 4 représente schématiquement une mémoire contenant un mode de réalisation d'une liste chaînée d'enregistrements pour programmer les registres de la figure 3 ;
la figure 5 est un organigramme illustrant plus en détail un mode de réalisation d'une étape du procédé de la figure 2 ;
la figure 6 illustre, schématiquement et sous forme de blocs, un autre mode de réalisation d'une banque de registres d'un circuit de contrôle d'accès direct en mémoire ; et
la figure 7 est un organigramme illustrant un mode de réalisation d'un procédé de transfert de données par accès direct en mémoire.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers paramètres couramment utilisés pour des transferts de données par accès direct en mémoire n'ont pas été détaillés, les modes de réalisation décrits étant compatibles avec ces paramètres usuels. En outre, les divers systèmes électroniques dans lesquels un contrôleur d'accès direct en mémoire est prévu n'ont pas été détaillés, les modes de réalisation décrits étant compatibles avec la plupart de ces systèmes électroniques usuels.

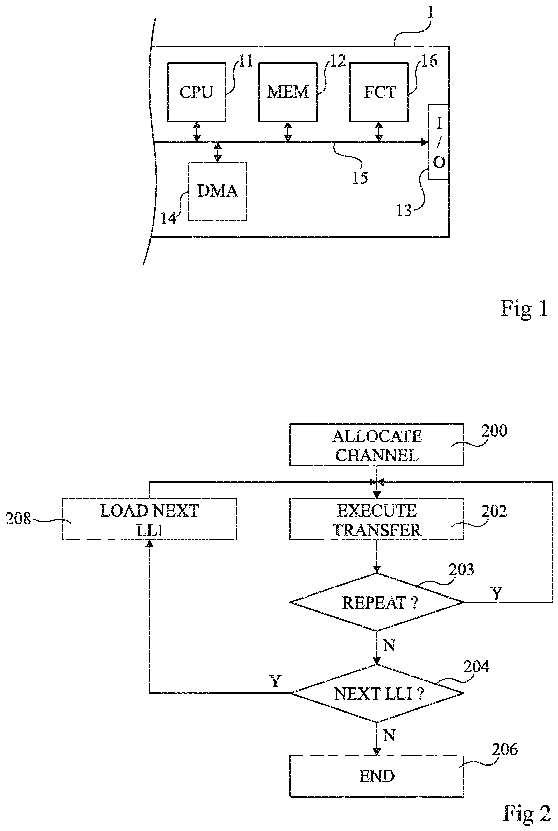

La figure 1 représente, de façon très schématique et sous forme de blocs, un mode de réalisation d'un circuit ou système électronique 1 du type auquel s'appliquent, à titre d'exemple, les modes de réalisation qui vont être décrits.

Le système électronique 1 comporte :
- une unité centrale de traitement 11 (CPU), par exemple une machine d'états, un microprocesseur, un circuit logique programmable, etc. ;
- une ou plusieurs mémoires parmi lesquelles au moins une mémoire vive 12 (MEM), par exemple de type SRAM ;
- au moins une interface d'entrée-sortie 13 (I/O) de communication, par exemple de type bus série, avec l'extérieur du système 1 ;
- un circuit de contrôle d'accès direct en mémoire 14 (DMA) ; et
- un ou plusieurs bus de données, d'adresses et/ou de commandes entre les différents éléments internes au système 1, représentés ici sous la forme d'un unique bus 15.

Par ailleurs, le système 1 peut intégrer d'autres fonctions, symbolisées par un bloc 16 (FCT), selon l'application, par exemple un processeur dédié au traitement d'images, d'autres interfaces, d'autres mémoires, etc.

Le système 1 est configuré pour exécuter diverses applications telles que du traitement d'images, de l'encodage et/ou du décodage vidéo, du traitement de données provenant d'un capteur, etc... Ces applications requièrent des transferts de données, par l'intermédiaire du bus 15, entre des éléments internes au système 1. Afin de fluidifier le fonctionnement du système 1 et de réduire la charge de l'unité centrale 11, ces transferts de données sont effectués par accès direct en mémoire, sous le contrôle du circuit 14. Dans ce mode de réalisation, le circuit 14 comprend plusieurs canaux de transfert de données. Chaque canal du circuit 14 permet de réaliser des transferts de données entre deux éléments (circuit et/ou mémoire) du système 1. Chaque canal est associé à une banque de registres stockant, pour chaque transfert de données sur le canal, les paramètres du transfert.

Lorsqu'une application doit être exécutée par le système 1, l'unité centrale 11 configure le circuit 14 de sorte que le circuit 14 réserve l'un de ces canaux à l'application. Tous les transferts de données de l'application s'effectuent alors via le canal réservé à l'application. Dans les modes de réalisation décrits, l'élément de source et/ou l'élément de destination des données à transférer peuvent changer pendant l'exécution de l'application.

La figure 2 est un organigramme illustrant, sous forme de blocs, un mode de réalisation d'un procédé de transfert de données par accès direct en mémoire. Plus particulièrement, la figure 2 illustre, pour une application donnée, un procédé de mises à jour successives d'une banque de registres associée à un canal du circuit 14 de la figure 1, à partir d'une liste chaînée d'enregistrements représentative des transferts de données de l'application.

A une étape initiale 200 (ALLOCATE CHANNEL), un canal est attribué à une application en programmant la banque de registres associée à ce canal avec les paramètres d'un premier transfert de données de cette application. Cette étape revient à indiquer au circuit 14 quelle liste chaînée d'enregistrements il doit utiliser pour paramétrer les transferts devant avoir lieu sur ce canal. Chaque enregistrement de la liste détermine l'adresse en mémoire de l'enregistrement suivant. Chaque enregistrement détermine en outre les paramètres d'un transfert de données correspondant, par exemple l'indication que le transfert concerne des données ou des blocs de données, l'adresse de début d'une plage d'adresses d'une source où sont stockés les données ou les blocs de données à transférer, l'adresse de début d'une plage d'adresses d'une destination où doivent être copiés les données ou les blocs de données transférés, le nombre de données ou de blocs de données à transférer, la taille des données, le nombre de données par blocs, des décalages d'adresses entre deux données successives ou entre deux blocs successifs à transférer, etc. Chaque enregistrement peut donc correspondre au transfert d'une donnée, de plusieurs données, d'un bloc de données ou de plusieurs blocs entre une source et une destination.

Selon un mode de réalisation, à l'étape 200, la banque de registres est programmée en lisant en mémoire 12, à une adresse mémoire fournie par l'unité centrale 11, le premier enregistrement d'une liste et en programmant la banque de registres à partir de cet enregistrement.

Selon un autre mode de réalisation, à l'étape 200, la banque de registres est programmée directement, sans lecture d'un enregistrement en mémoire 12, par exemple à l'initialisation du système 1 ou par l'unité centrale 11. En particulier, l'adresse du premier enregistrement d'une liste est alors programmée dans la banque de registres.

Une fois que la banque de registres a été programmée pour attribuer le canal à l'application, l'unité centrale 11 indique au circuit 14 qu'il peut commencer à exécuter les transferts de données de l'application.

A une étape 202 suivante (EXECUTE TRANSFER), le circuit 14 effectue, sur le canal réservé à l'application, le transfert de données paramétré par le contenu de la banque de registres du canal, étant entendu que ce transfert peut concerner plusieurs données ou plusieurs blocs de données.

Un test 203 (REPEAT?) est ensuite réalisé pour déterminer, à partir du contenu de la banque de registres, si le transfert de données exécuté à l'étape 202 précédente, et dont les paramètres sont stockés dans la banque de registres, doit ou non être répété.

Si ce transfert doit être répété (sortie Y du bloc 203), le procédé se poursuit à l'étape 202. On comprend que, du fait que le contenu de la banque de registres n'est alors pas modifié, ce transfert est ensuite exécuté en boucle.

Si ce dernier transfert n'a pas à être répété (sortie N du bloc 203), le procédé se poursuit par un test 204 (NEXT LLI?). Ce test détermine, à partir du contenu courant de la banque de registres, s'il y a un enregistrement suivant dans la liste, autrement dit s'il reste au moins un transfert à effectuer pour cette application.

S'il n'y a pas d'enregistrement suivant dans la liste (sortie N du bloc 204), le test 204 est suivi d'une étape 206 (END) où le canal est libéré et peut ensuite être attribué à une nouvelle application.

S'il y a un enregistrement suivant (sortie Y du bloc 204), le test 204 est suivi d'une étape 208 (LOAD NEXT LLI) où cet enregistrement suivant est lu en mémoire 12 par le circuit 14 et la banque de registres est mise à jour avec les paramètres du transfert de données suivant de l'application. Le procédé se poursuit alors à l'étape 202.

On notera que l'ordre et/ou le nombre des étapes du procédé de la figure 2 peuvent être modifiés. En particulier, les tests 203 et 204 peuvent être effectués simultanément.

A titre d'exemple, on considère dans la suite de la description le cas où les transferts devant avoir lieu sur un canal ne s'effectuent pas au niveau bloc de données, mais uniquement au niveau donnée. On considère également que lorsqu'un transfert correspond au transfert de plusieurs données, ces données sont stockées les unes à la suite des autres dans une plage d'adresses de source et copiées les unes à la suite des autres dans une plage d'adresses de destination.

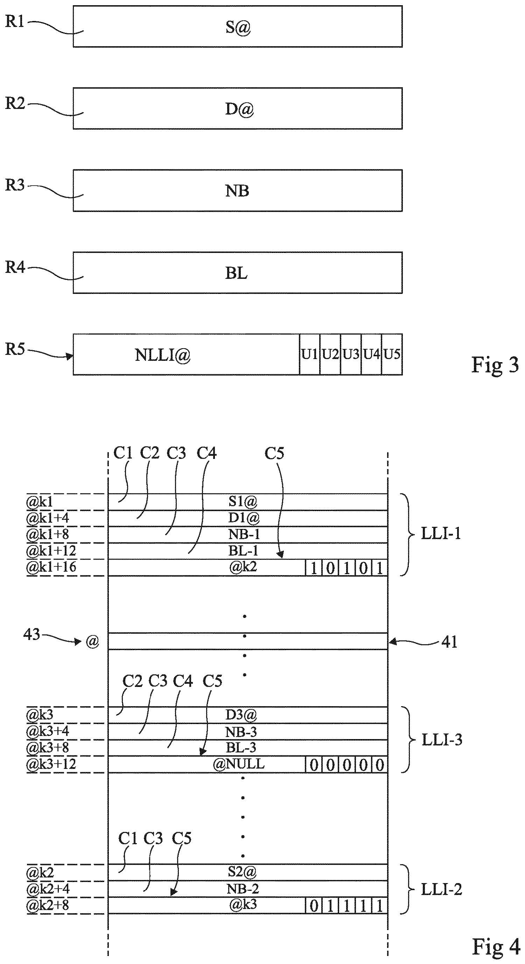

La figure 3 représente, schématiquement et sous forme de blocs, un mode de réalisation d'une banque de registres associée à un canal de transfert de données du circuit 14.

Dans cet exemple, la banque de registres comprend cinq registres R1, R2, R3, R4 et R5 permettant de stocker temporairement les paramètres d'un transfert de données. Les registres R1, R2, R3, R4 et R5 sont ici destinés à stocker respectivement l'adresse S@ de début d'une plage d'adresses d'une source des données à transférer, l'adresse D@ de début d'une plage d'adresses d'une destination des données à transférer, le nombre NB de données à transférer, la taille BL des données à transférer et l'adresse NLLI@ de l'enregistrement suivant dans la mémoire 12. Dans la suite de la description, on appelle registre de liste chaînée ou registre LLR (Linked List Register) le registre destiné à stocker les informations sur la liste chaînée d'enregistrements, et en particulier l'adresse NLLI@. De préférence, le registre LLR est le dernier registre de la banque de registres, dans cet exemple le registre R5.

Dans ce mode de réalisation, un des registres, de préférence le registre LLR, est également destiné à stocker des informations sur l'enregistrement suivant de la liste. Ces informations déterminent le nombre de champs de l'enregistrement suivant de la liste. Chaque champ d'un enregistrement est par exemple représentatif d'un contenu à programmer dans un registre correspondant, lors de la mise à jour suivante de la banque de registres. De préférence, chaque champ est directement recopié dans un registre correspondant lors de cette mise à jour. Les informations sur l'enregistrement suivant de la liste déterminent en outre à quel registre est affecté chaque champ de l'enregistrement suivant. Ces informations sont stockées par des bits du registre LLR R5, par exemple cinq bits U1, U2, U3, U4 et U5. Dans ce mode de réalisation, les bits U1, U2, U3, U4 et U5 sont affectés respectivement aux registres R1, R2, R3, R4 et R5, la valeur de chaque bit U1, U2, U3, U4, U5 déterminant si l'enregistrement suivant comprend un champ représentatif d'un contenu à programmer dans le registre, respectivement R1, R2, R3, R4, R5. Par exemple, si le bit U1 est à une première valeur binaire, par exemple '1', l'enregistrement suivant comprend un champ représentatif d'un contenu à programmer dans le registre R1, et si le bit est à la deuxième valeur binaire, par exemple '0', l'enregistrement suivant ne comprend pas de tel champ.

A titre d'exemple, le test 203 décrit en relation avec la figure 2 consiste à vérifier si tous les bits U1 à U5 sont à '0' et si l'adresse @NLLI n'est pas nulle. Si c'est le cas, cela signifie que la banque de registres ne doit pas être mise à jour et que le dernier transfert exécuté doit être répété.

A titre d'exemple encore, le test 204 décrit en relation avec la figure 2 consiste à vérifier si l'adresse @NLLI est nulle. Si c'est le cas, cela signifie qu'il n'y a pas d'enregistrement suivant et que tous les transferts de l'application ont été effectués.

On notera que les informations relatives au nombre de champs de l'enregistrement suivant et au registre auquel est affecté chacun de ces champs, l'indication selon laquelle un transfert doit être répété et/ou l'indication selon laquelle la liste ne contient plus d'enregistrement suivant peuvent être représentées sous une forme différente de celle décrite ci-dessus à titre d'exemple.

La figure 4 représente schématiquement une mémoire, par exemple la mémoire 12 de la figure 1, contenant un mode de réalisation d'une liste chaînée d'enregistrements pour programmer les registres de la figure 3.

La mémoire 12 est divisée en plusieurs mots mémoire 41 de taille fixe, par exemple 4 octets, étant chacun associé à une adresse 43 de la mémoire. La mémoire 12 contient une liste chaînée d'enregistrements constituée, dans cet exemple, de trois enregistrements LLI-1, LLI-2 et LLI-3. Les champs d'un même enregistrement sont enregistrés les uns à la suite des autres dans la mémoire 12, ici à partir de l'adresse en mémoire du premier champ de cet enregistrement. Dans cet exemple, chaque champ occupe un mot mémoire 41. En variante, chaque champ peut nécessiter plus d'un mot mémoire pour son stockage mémoire ou un mot mémoire peut contenir plus d'un champ. De préférence, les champs de chaque enregistrement se succèdent dans le même ordre que les registres correspondants de la banque de registres. Dans cet exemple, l'adresse en mémoire d'un enregistrement correspond à l'adresse à laquelle est enregistré le premier champ de cet enregistrement.

Dans cet exemple, on considère le cas où, à l'étape 200 de la figure 2, la banque de registres est programmée à partir du premier enregistrement LLI-1 de la liste. Comme cela est illustré en figure 4, ce premier enregistrement LLI-1 comprend alors autant de champs qu'il y a de registres, cinq dans cet exemple, de sorte que chaque registre puisse être programmé avec un champ de l'enregistrement. Plus particulièrement, l'enregistrement LLI-1 comprend des champs successifs C1, C2, C3, C4 et C5 représentatifs d'un contenu à programmer dans les registres respectivement R1, R2, R3, R4 et R5. Dans cet exemple, les champs C1, C2, C3 et C4 de l'enregistrement LLI-1 sont représentatifs respectivement d'une adresse S1@, d'une adresse D1@, d'un nombre NB-1 et d'une taille BL-1. Le champ C5 de l'enregistrement est représentatif de l'adresse @k2 de l'enregistrement suivant LLI-2 dans la mémoire 12, et d'informations sur cet enregistrement suivant LLI-2. Dans cet exemple, les informations relatives à l'enregistrement suivant sont sous la forme de cinq bits de valeurs '1', '0', '1', '0' et '1' correspondant respectivement aux bits U1, U2, U3, U4 et U5 du registre R5. Dans cet exemple, le premier champ C1 de l'enregistrement LLI-1 est enregistré dans le mot mémoire d'adresse @k1 et les champs suivants C2, C3, C4 et C5 sont enregistrés dans les mots mémoire suivants d'adresses respectives @k1+4, @k1+8, @k1+12 et @k1+16, chaque mot mémoire occupant ici quatre octets.

Le deuxième enregistrement LLI-2 comprend des champs successifs C1, C3 et C5 représentatifs d'un contenu à programmer dans les registres respectivement R1, R3 et R5. Les champs C1 et C2 sont représentatifs respectivement d'une adresse S2@ et d'un nombre NB-2, le champ C5 étant représentatif de l'adresse @k3 de l'enregistrement suivant LLI-3 et de cinq bits de valeurs '0', '1', '1', '1' et '1' correspondant respectivement aux bits U1, U2, U3, U4 et U5 du registre R5. Dans cet exemple, le premier champ C1 de l'enregistrement LLI-2 est enregistré dans le mot mémoire d'adresse @k2 et les champs suivants C3 et C5 sont enregistrés dans les mots mémoire suivants d'adresses respectives @k2+4 et @k2+8.

Le troisième enregistrement LLI-3 comprend des champs successifs C2, C3, C4 et C5 représentatifs d'un contenu à programmer dans les registres respectivement R2, R3, R4 et R5. Les champs C2, C3 et C4 sont représentatifs respectivement d'une adresse D3@, d'un nombre NB-3 et d'une taille BL-3. Dans l'exemple représenté, le champ C5 est représentatif d'une adresse nulle @NULL et de cinq bits U1 à U5 de valeur '0', ce qui indique que l'enregistrement LLI-3 est le dernier de la liste et que le transfert correspondant à cet enregistrement n'a pas à être répété. Dans cet exemple, le premier champ C2 de l'enregistrement LLI-3 est enregistré dans le mot mémoire d'adresse @k3 et les champs suivants C3, C4 et C5 sont enregistrés dans les mots mémoire suivants d'adresses respectives @k3+4, @k3+8 et @k3+12.

Dans la liste décrite ci-dessus, au moins certains enregistrements stockés dans la mémoire contiennent un nombre de champs inférieur au nombre de registres de la banque de registres mise à jour à partir de ces enregistrements. Ainsi, la capacité de stockage de la mémoire 12 peut être réduite par rapport à celle d'une mémoire dans laquelle chaque enregistrement d'une liste chaînée aurait autant de champs qu'il y a de registres dans la banque de registres. La diminution de la capacité de stockage de la mémoire 12 entraîne une diminution de sa surface et de sa consommation statique.

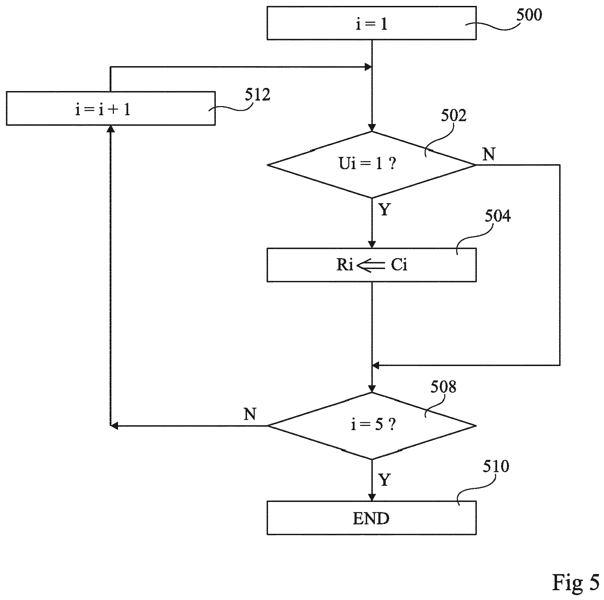

La figure 5 illustre, sous la forme d'un organigramme, l'étape 208 du procédé de la figure 2 décrite ci-dessus, c'est-à-dire la mise à jour de la banque de registres à partir d'un enregistrement d'une liste chaînée d'enregistrements stockée en mémoire.

A une étape d'initialisation 500 (i=1), une variable de boucle i, avec i entier, est initialisée, à 1 dans cet exemple.

A une étape de test 502 suivante (Ui=1 ?), le circuit 14 teste la valeur courante du bit Ui du registre LLR R5 pour déterminer si l'enregistrement suivant contient un champ Ci représentatif d'un contenu à programmer dans le registre Ri.

Si, lors du test 502, la valeur courante du bit Ui du registre LLR R5 est '1' (sortie Y du bloc 502), cela signifie que l'enregistrement suivant comprend un champ Ci représentatif d'un contenu à programmer dans le registre Ri. Le test est alors suivi d'une étape 504 (Ri<=Ci) de programmation du registre Ri avec ce contenu. L'étape 504 est suivie d'un test 508 (i=5 ?) au cours duquel on vérifie si la valeur courante de chaque bit Ui du registre R5 a été testée. Si c'est le cas (sortie Y du bloc 508), la mise à jour de la banque de registres à partir de l'enregistrement suivant est terminée (bloc END, 510). Sinon (sortie N du bloc 508), le procédé se poursuit à une étape 512 (i=i+1) où la variable i est incrémentée, puis le procédé reboucle sur l'étape 502.

Si, lors du test 502, la valeur courante du bit Ui du registre LLR R5 est '0' (sortie N du bloc 502), cela signifie que l'enregistrement suivant ne comprend pas de champ Ci représentatif d'un contenu à programmer dans le registre Ri. Le procédé se poursuit alors directement à l'étape 508 et le contenu du registre Ri est laissé inchangé.

Le procédé décrit ci-dessus permet, lorsque la banque de registres associée à un canal est mise à jour à partir d'un enregistrement d'une liste chaînée du type décrit en figure 4, de ne mettre à jour que certains registres de cette banque de registres, de préférence uniquement les registres dont le contenu est modifié entre deux transferts successifs. Il en résulte une réduction du nombre d'accès à la mémoire 12 par rapport au cas où tous les registres de la banque seraient mis à jour. Cette diminution du nombre d'accès en mémoire 12 entraîne une diminution de la consommation dynamique de la mémoire 12, et plus généralement du système 1 de la figure 1. On tire ici profit du fait que deux transferts de données successifs sur un canal réservé à une application ont généralement certains paramètres identiques.

On notera que l'ordre et/ou le nombre des étapes du procédé ci-dessus peuvent être modifiés. Par exemple, tous les bits Ui peuvent d'abord être lus, puis toutes les mises à jour des registres sont effectuées en fonction des valeurs des bits lus.

En outre, les modes de réalisation décrits en relation avec les figures 1 à 5 s'appliquent à des banques de registres d'autres circuits qu'un contrôleur d'accès direct en mémoire, pour paramétrer l'exécution d'une tâche par ce circuit.

Dans les modes de réalisation décrits ci-dessus, comme c'est généralement le cas dans un circuit de contrôle d'accès direct en mémoire, une fois qu'un canal a été attribué à une application (étape 200, figure 2) et que l'unité centrale 11 a autorisé le circuit 14 à exécuter les transferts de cette application, le circuit 14 effectue tous ces transferts de manière autonome, sans intervention de l'unité centrale 11. Une fois que tous les transferts ont été réalisés, le circuit 14 prévient l'unité centrale 11 qui peut alors attribuer ce canal à une autre application. Ainsi, une synchronisation entre deux applications, exécutées sur deux canaux différents du circuit 14, ne peut être effectuée que par l'unité centrale 11, soit au début de l'exécution d'une des deux applications, soit à la fin de l'exécution d'une des deux applications, quand tous les enregistrements correspondant aux transferts de données de cette application ont été lus et les transferts correspondants effectués.

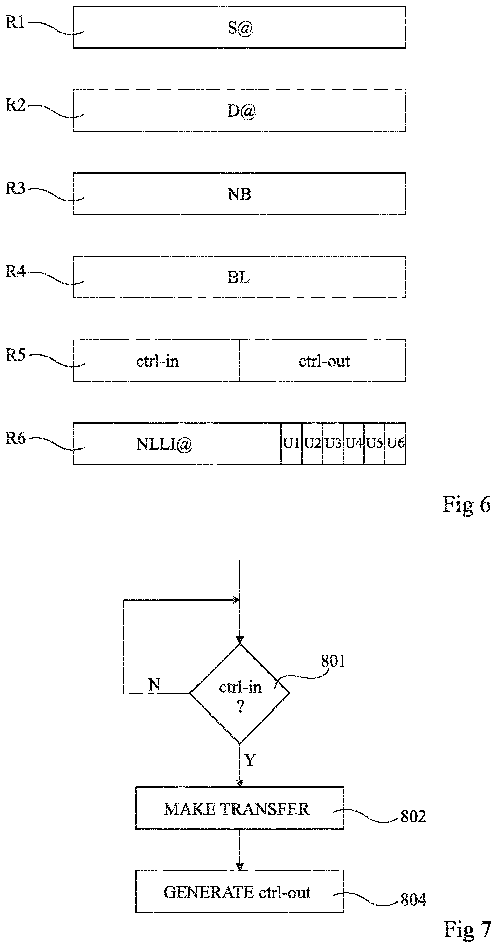

La figure 6 représente, schématiquement et sous forme de blocs, un exemple d'un autre mode de réalisation d'une banque de registres d'un canal de transfert de données du circuit 14.

La banque de registres de la figure 6 comprend ici six registres R1, R2, R3, R4, R5 et R6, les registres R1, R2, R3 et R4 de la figure 6 étant, dans cet exemple, similaires aux registres R1, R2, R3 et R4 de la figure 3. Le registre R5 est ici destiné à stocker une condition ctrl-in de début de transfert et un événement ctrl-out de fin de transfert. Le registre R6 constitue le registre de liste chaînée (LLR) de la banque de registres et est, comme en figure 3, destiné à stocker l'adresse NLLI@ d'un enregistrement suivant et les informations relatives à cet enregistrement suivant, notamment le nombre de champs de l'enregistrement et à quel registre est affecté chaque champ de l'enregistrement suivant. Ces informations sont ici stockées sous la forme de six bits U1, U2, U3, U4, U5 et U6 respectivement associés aux registres R1, R2, R3, R4, R5 et R6.

La mise à jour de la banque de registres de la figure 6 à partir d'un enregistrement d'une liste chaînée d'enregistrements s'effectue de manière similaire à ce qui a été décrit en relation avec les figures 1 à 5, les enregistrements de la liste étant adaptés en conséquence. En particulier, chaque enregistrement peut comprendre un champ supplémentaire C6 (non illustré) représentatif d'un contenu à programmer dans le registre R6. En outre, pour chaque enregistrement, le champ C6 de l'enregistrement peut alors comprendre six bits correspondant aux six bits U1 à U6 du registre R6.

Dans une variante de réalisation, la condition ctrl-in et l'événement ctrl-out sont stockés dans un des registres R1 à R4 et R6, la condition ctrl-in pouvant être stockée dans un autre registre que celui stockant l'événement ctrl-out. Cette variante est par exemple mise en oeuvre quand un ou plusieurs des registres R1 à R4 et R6 contiennent des bits inutilisés permettant alors de stocker ces informations ctrl-in et ctrl-out. Cela permet de supprimer le registre R5, le registre LLR R6 étant alors renuméroté R5.

La figure 7 est un organigramme illustrant un mode de réalisation d'un procédé de transfert de données par accès direct en mémoire. Plus particulièrement, la figure 7 illustre plus en détail l'étape 202 du procédé de la figure 2.

A une étape 801 (ctrl-in ?) mise en oeuvre par le circuit 14, tous les paramètres du transfert de données à exécuter sont stockés dans les registres de la banque de registres. L'étape 801 consiste en la détection de la condition ctrl-in de début de transfert, stockée dans le registre R5 dans cet exemple. L'étape 801 est répétée (sortie N du bloc 801) tant que cette condition ctrl-in n'est pas détectée. Lorsque la condition ctrl-in est détectée (sortie Y du bloc 801), le procédé se poursuit à une étape 802 (MAKE TRANSFER) au cours de laquelle le transfert de données paramétré par le contenu de la banque de registres est effectué, puis, une fois ce transfert terminé, par une étape 804 (GENERATE ctrl-out) au cours de laquelle l'événement ctrl-out est généré par le circuit 14.

Dans ce mode de réalisation, lorsqu'un événement ctrl-out est généré à la fin d'un premier transfert de données sur un premier canal réservé à une première application, et que la condition ctrl-in de début d'un deuxième transfert sur un deuxième canal réservé à une deuxième application correspond à la détection de cet événement ctrl-out, le deuxième transfert ne peut débuter qu'après la génération de l'événement ctrl-out du premier transfert. Ainsi, les premier et deuxième transferts, donc les première et deuxième applications, peuvent être synchronisés l'un par rapport à l'autre, directement au niveau du circuit 14, sans intervention de l'unité centrale 11 et alors que ces applications sont en train d'être exécutées. Plus généralement, la prévision d'une condition ctrl-in et d'un événement ctrl-out pour au moins certains transferts de données de plusieurs applications exécutées par le système 1 permet de synchroniser ces applications entre elles, sans recourir à l'unité centrale qui peut être mise en veille, voire éteinte, pendant l'exécution de ces applications.

Dans une variante de réalisation non représentée, on prévoit un paramètre supplémentaire indiquant à quel moment doit être détectée la condition ctrl-in lors d'un transfert de plusieurs données, par exemple avant le transfert de la première donnée ou avant le transfert de chaque donnée. De manière similaire, on prévoit un paramètre supplémentaire indiquant à quel moment doit être généré l'événement ctrl-out lors d'un transfert de plusieurs données, par exemple après le transfert de la dernière donnée ou après le transfert de chaque donnée. Les registres et les enregistrements de la liste sont alors adaptés pour intégrer ces paramètres supplémentaires. Le procédé de la figure 7 est également adapté en conséquence. Par exemple, lors d'un transfert de plusieurs données, si la condition ctrl-in est détectée avant chaque transfert d'une donnée et que l'événement ctrl-out est généré après chaque transfert d'une donnée, les étapes 801, 802 et 804 sont mises en oeuvre pour chaque donnée transférée, l'étape 802 correspondant alors au transfert de la donnée.

La prévision d'un ou plusieurs paramètres supplémentaires pour indiquer le ou les moments d'un transfert où une condition ctrl-in doit être détectée et le ou les moments où un événement ctrl-out doit être généré permet de contrôler la granularité à laquelle s'effectue la synchronisation entre des applications exécutées en parallèle par le système 1.

On notera que la condition ctrl-in d'un transfert sur un canal peut correspondre à la détection d'un événement autre qu'un événement ctrl-out généré lors d'un transfert sur un autre canal, par exemple à une interruption générée dans le système 1.

A titre d'exemple, chaque condition ctrl-in peut correspondre à la détection d'un changement de niveau, par exemple le passage d'un niveau haut à un niveau bas ou inversement, d'un signal correspondant à cette condition. Chaque événement ctrl-out consiste par exemple à changer le niveau d'un signal correspondant à cet événement.

On notera que le mode de réalisation des figures 6 et 7 peut être mis en oeuvre sans les bits U1 à U6. Dans ce cas, comme il n'y a pas de mise à jour conditionnelle des registres, chaque enregistrement de la liste chaînée contient autant de champs qu'il y a de registres.

Dans des variantes de réalisation non décrites, les registres et les enregistrements décrits en relation avec les figures 3 à 7 peuvent intégrer un ou plusieurs paramètres supplémentaires de manière à gérer des transferts par blocs de données et/ou, dans une plage d'adresses de source et/ou de destination, des décalages d'adresses entre deux données ou deux blocs de données à transférer successifs.

En outre, dans le cas où les registres et les enregistrements sont adaptés de manière à gérer des transferts par blocs de données, on peut prévoir que, lors d'un transfert de plusieurs blocs de données, la condition ctrl-in soit détectée avant le transfert de chaque bloc et/ou que l'événement ctrl-out soit généré après le transfert de chaque bloc. Le ou les paramètres indiquant à quels moments détecter la condition ctrl-in et/ou générer l'événement ctrl-out seront alors adaptés en conséquence, de même que le procédé décrit en relation avec la figure 7.

Des modes de réalisation particuliers ont été décrits, l'homme de l'art pourra combiner divers éléments de ces divers modes de réalisation et variantes sans faire preuve d'activité inventive. En outre, diverses variantes et modifications apparaîtront à l'homme de l'art. En particulier, le nombre de registres, le nombre de paramètres stockés par la banque de registres et/ou le nombre de paramètres stockés par chaque registre peuvent varier.

Par ailleurs, d'autres paramètres peuvent être prévus. Par exemple, dans le cas d'un transfert de données par accès direct en mémoire, un paramètre peut indiquer si les données et/ou les blocs de données du transfert correspondant à un enregistrement doivent être transférées au coup par coup ou par salve ("burst").

## Revendications

1. Mémoire (12) contenant au moins une liste chaînée d'enregistrements, chaque enregistrement (LLI-1, LLI-2, LLI-3) contenant un premier champ (C5) déterminant le nombre de champs (C1, C2, C3, C4, C5) de l'enregistrement suivant, chaque champ (C1, C2, C3, C4, C5) d'un enregistrement étant représentatif d'un contenu à programmer dans un registre (R1, R2, R3, R4, R5) d'une banque de registres.

2. Mémoire selon la revendication 1, dans laquelle le premier champ (C5) d'un enregistrement détermine quel registre ou quels registres de la banque de registres sont programmés à partir du ou des champs de l'enregistrement suivant lors d'une mise à jour de la banque de registres à partir de l'enregistrement suivant.

3. Mémoire selon la revendication 1 ou 2, dans laquelle le premier champ (C5) détermine dans quels registres (R1, R2, R3, R4, R5) doivent être programmés lesdits contenus.

4. Mémoire selon l'une quelconque des revendications 1 à 3, dans laquelle le premier champ (C5) comprend des bits (U1, U2, U3, U4, U5) dont chacun identifie un registre (R1, R2, R3, R4, R5), les valeurs desdits bits déterminant les champs de l'enregistrement à programmer.

5. Mémoire selon l'une quelconque des revendications 1 à 4, dans laquelle chaque enregistrement (LLI-1, LLI-2, LLI-3) est représentatif de paramètres (S@, D@, NB, BL, NLLI@, ctrl-in, ctrl-out) d'exécution d'une tâche.

6. Mémoire selon la revendication 5, dans laquelle ladite tâche est un transfert de données par un circuit (14) de contrôle d'accès direct en mémoire.

7. Mémoire selon la revendication 6, dans laquelle, pour chaque enregistrement (LLI-1, LLI-2, LLI-3) représentatif d'un transfert de données, les paramètres d'exécution du transfert comprennent une condition (ctrl-in) de début de transfert et un événement (ctrl-out) de fin de transfert.

8. Mémoire selon la revendication 7, dans laquelle, pour chaque enregistrement, les paramètres d'exécution du transfert comprennent en outre une indication d'au moins un moment où ladite condition doit être détectée et d'au moins un moment où ledit événement doit être généré.

9. Mémoire selon la revendication 7 ou 8, contenant une première et une deuxième listes chaînées d'enregistrements, la condition (ctrl-in) de début d'un enregistrement de la première liste correspondant à une détection de l'événement (ctrl-out) d'un enregistrement de la deuxième liste.

10. Mémoire selon l'une quelconque des revendications 1 à 9, la mémoire (12) étant de type SRAM.

11. Procédé comprenant des mises à jour successives d'une banque de registres (R1, R2, R3, R4, R5) à partir d'une liste chaînée d'enregistrements (LLI-1, LLI-2, LLI-3) contenue dans une mémoire (12) selon l'une quelconque des revendications 1 à 10.

12. Procédé selon la revendication 11, dans lequel chaque enregistrement (LLI-1, LLI-2, LLI-3) détermine une des mises à jour successives.

13. Procédé selon la revendication 11 ou 12 comprenant :
- lire le registre (R5) programmé à partir du premier champ (C5) d'un enregistrement courant (LLI-1, LLI-2) ;
- en déduire, pour chaque registre (R1, R2, R3, R4, R5), si l'enregistrement suivant (LLI-2, LLI-3) comprend un champ à partir duquel le registre doit être programmé lors de la prochaine programmation de la banque de registres ; et
- lors de ladite prochaine programmation de la banque de registres, programmer à partir de chaque champ de l'enregistrement suivant le registre correspondant de la banque de registres.

14. Système électronique comprenant une mémoire (12) selon l'une quelconque des revendications 1 à 10, et un circuit (14) muni d'une banque de registres, le circuit étant configuré pour mettre en oeuvre le procédé de l'une quelconque des revendications 11 à 13.

15. Système selon la revendication 14, dans lequel le circuit (14) est un contrôleur d'accès direct en mémoire.
